# EUROPÄISCHE PATENTSCHRIFT

(11) **EP 0 709 000 B1**
(45) Veröffentlichungstag und Bekanntmachung des Hinweises auf die Patenterteilung: **17.09.1997**
(21) Anmeldenummer: 94919553.1
(22) Anmeldetag: 30.06.1994
(51) Int. Cl.: H02M 7/48

(54) **VERFAHREN UND VORRICHTUNG ZUR STEUERUNG EINER M-PULSIGEN WECHSELRICHTERANORDNUNG, BESTEHEND AUS EINEM MASTER-WECHSELRICHTER UND WENIGSTENS EINEM SLAVE-WECHSELRICHTER**
METHOD AND DEVICE FOR FIRING AN M-PULSE D.C./A.C. CONVERTER ASSEMBLY CONSISTING OF A MASTER D.C./A.C. CONVERTER AND AT LEAST ONE SLAVE D.C./A.C. CONVERTER
PROCEDE ET DISPOSITIF POUR LA COMMANDE D'UN DISPOSITIF ONDULEUR A M IMPULSIONS COMPRENANT UN ONDULEUR MAITRE ET AU MOINS UN ONDULEUR ESCLAVE

(30) Priorität: 15.07.1993 DE 4323804
(43) Veröffentlichungstag der Anmeldung: 01.05.1996
(73) Patentinhaber: SIEMENS AKTIENGESELLSCHAFT, 80333 München (DE)
(72) Erfinder: VOLKERT, Norbert, D-91054 Erlangen (DE)
(86) Internationale Anmeldenummer: DE9400757
(87) Internationale Veröffentlichungsnummer: WO9502919

(56) Entgegenhaltungen:
- EP-A- 0 489 971
- EP-A- 0 524 398
- DE-C- 4 023 207

## Beschreibung

Verfahren und Vorrichtung zur Steuerung einer m-pulsigen Wechselrichteranordnung, bestehend aus einem Master-Wechselrichter und wenigstens einem Slave-Wechselrichter

Die Erfindung bezieht sich auf ein Verfahren gemäß dem Oberbegriff des Anspruchs 1. Ein solches Verfahren ist durch die EP 0 489 971 A1 bekannt.

Durch die verschiedenen Schaltzeiten der steuerbaren Halbleiterventile entstehen bei der Parallelschaltung von Wechselrichterzweigpaaren zusätzliche Belastungen durch Ausgleichsströme, die die speisende Gleichspannungsquelle durch die gleichsinnig gesteuerten Wechselrichterzweige treibt. Diese Ausgleichsströme müssen durch Zusatzmaßnahmen begrenzt bzw. vermieden werden.

Die unsymmetrische Aufteilung der Ströme kann folgende Gründe haben:
- Unterschiedliche Durchlaßspannungen der Leistungshalbleiterschalter,
- unterschiedliche Schalt- und/oder Verzögerungszeiten der Leistungshalbleiterschalter, der Impulsbildung und der Impulsverstärker,
- unterschiedliche Sperrschichttemperaturen der Leistungshalbleiterschalter infolge der unsymmetrischen Belastung bzw. Kühlung.

Zur Symmetrierung der Aufteilung der Ströme können folgende Maßnahmen getroffen werden:
- Vorselektierung der Leistungshalbleiterschalter, so daß nur Halbleiter mit ähnlichem Durchlaß- und Schaltverhalten verwendet werden. Die Vorselektierung ist mit zusätzlichem Aufwand verbunden und ist deshalb in der Praxis für die Fertigung und Lagerhaltung nachteilig.
- Die Entkopplungsdrosseln werden genutzt, um die Unterschiede in den Strömen zu reduzieren. Eine gleichmäßige Stromaufteilung durch Vorberechnung der erforderlichen Spannungszeitfläche der Querdrosseln erfordert aber eine genaue Kenntnis der Streuungsgrenzen der Schaltverzugszeiten, der Durchlaßspannungen der Leistungshalbleiterschalter und ihrer Last- und Temperaturabhängigkeit.

Bei dem in der eingangs genannten EP 0 489 971 A1 beschriebenen Verfahren wird zunächst die Stromdifferenz ermittelt, wobei die Phasenströme eines Master-Wechselrichters und die Phasenströme eines Slave-Wechselrichters verwendet werden. Diese ermittelten Phasenstrom-Istwertdifferenzen dienen zur Erzeugung von Steuersignalen für den Slave-Wechselrichter. Dabei werden in Abhängigkeit der Polarität und der Amplitude dieser Phasenstrom-Istwertdifferenzen die Steuersignale des Wechselrichtersteuersatzes derart zeitlich verzögert, daß sich die Phasenstrom-Istwertdifferenzen verringern. Diese erzeugten Steuersignale steuern den Slave-Wechselrichter an, während Steuerimpulse des Wechselrichtersteuersatzes den Master-Wechselrichter ansteuern.

Da die vom Wechselrichtersteuersatz bestimmten Schaltzeitpunkte nicht im voraus bekannt sind, ist ein Regeleingriff in der Form eines verfrühten Schaltens nicht möglich. Daher besteht nur die Möglichkeit einer Verzögerung der Schaltbefehle. Diese Zeitverzögerung, die in Abhängigkeit der Polarität und der Amplitude von ermittelten Phasenstrom-Istwertdifferenzen bestimmt wird, wird beim Ausschalten und beim Einschalten bewerkstelligt.

In dem DE-Patent 40 23 207 wird ein Verfahren zum Betrieb von an eine gemeinsame Gleichspannungsquelle angeschlossenen, mit ihren aus Halbleiterschaltern gebildeten Zweigen im Parallelbetrieb arbeitenden Wechselrichtern, die jeweils über eine Drosselspule eine gemeinsame Last speisen, bei dem die aufgrund ungleicher Schaltzeiten der Halbleiterschalter auftretenden Ausgleichsströme begrenzt werden können, angegeben. Dabei werden die Ströme durch die jeweils parallel geschalteten Wechselrichterzweige erfaßt, und es wird aus den Stromwerten ein Mittelwert gebildet. Dieser Mittelwert der Ströme wird jeweils mit den Stromwerten der einzelnen Wechselrichterzweige verglichen. Entsprechend der Abweichung des jeweiligen Stromwertes vom Mittelwert über eine vorgebbare Bandbreite hinaus werden die Einsatzpunkte und/oder die Endzeitpunkte der Zündimpulse für die Halbleiterschalter der einzelnen Wechselrichterzweige derart vorverlegt oder verzögert, daß eine Symmetrierung der durch die Wechselrichterzweige fließenden Ströme erfolgt. Grundsätzlich wird für alle Halbleiterschalter in den Wechselrichterzweigen, deren Stromwerte innerhalb der um den Mittelwert vorgegebenen Bandbreite liegen, auch der Einsatzpunkt der Zündimpulse um eine vorgegebene Zeit verzögert und/oder es wird auch der Endzeitpunkt der Zündimpulse um eine vorgegebene Zeit vorverlegt.

Bei diesen beschriebenen Verfahren werden je nach Polarität des Differenzstromes und nachdem, um welchen Leistungsschalter es sich handelt, wird die steigende oder die fallende Flanke des Steuersignals entsprechend verschoben. Während der Verzögerungszeit liegt die Zwischenkreisspannung mit positivem oder negativem Vorzeichen zwischen Master und dem jeweiligen Slave und baut den Differenzstrom ab. Um Brückenkurzschlüsse zu vermeiden, müssen die oberen und unteren Ventile anschließend noch gegeneinander verriegelt werden.

Da die Verriegelung im Einzelgerät bereits vorhanden ist, wäre es von Vorteil, diese auch für die Parallelschaltung nutzen zu können. Läßt man die sogenannte Δ-I-Regelung auf die bereits verriegelten Steuersignale einwirken, wird bei den fallenden Flanken des Steuersignals die Verriegelungszeit verkürzt. Sie muß deshalb für einen sicheren Betrieb des Leistungsteils um die maximale Verzögerung der Δ-I-Regelung verlängert werden. Dadurch entstehen allerdings hohe nicht zu tolerierende Verzerrungen des Ausgangsstromes.

Die Erfindung beruht auf der Erkenntnis, daß sich Regeleingriffe auf die steigenden Flanken nur auf die Mindestimpulszeit auswirken, nicht aber auf die Verriegelungszeit. Verzichtet man auf die Regelung der fallenden Flanke, würde ohne weitere Maßnahmen der Differenzstrom nur noch in einer Richtung beeinflußbar sein.

Der Erfindung liegt nun die Aufgabe zugrunde, ein Verfahren und eine Vorrichtung zur Steuerung der eingangs genannten Wechselrichteranordnung anzugeben, wodurch entstehende Stromdifferenzen zwischen einem Master-Wechselrichter und einem Slave-Wechselrichter auf einfache Weise ausgeregelt werden können.

Diese Aufgabe wird erfindungsgemäß durch die Merkmale des Anspruchs 1 bzw. 2 gelöst.

Das heißt, man hat mit der Verzögerung entweder des Master-Wechselrichters oder des Slave-Wechselrichters erreicht, daß nur durch Verschiebung der steigenden Flanken des Ansteuersignals der Differenzstrom in beiden Richtungen beeinflußt werden kann. Die fallenden Flanken werden jeweils direkt übernommen. Es ist damit möglich, die verriegelten Steuersignale des Wechselrichtersteuersatzes zu verwenden, ohne die Verriegelungszeit wegen der sogenannten Δ-I-Regelung verlängern zu müssen. Das Prinzip ist auch auf die Parallelschaltung mehrerer Wechselrichter anwendbar.

Vorteilhafte Ausgestaltungen der Vorrichtung sind den Ansprüchen 3 bis 7 zu entnehmen.

Zur weiteren Erläuterung der Erfindung wird auf die Zeichnung Bezug genommen, in der ein Ausführungsbeispiel einer Vorrichtung zur Durchführung des erfindungsgemäßen Verfahrens schematisch veranschaulicht ist.
- Figur 1: zeigt eine Ausführungsform einer Vorrichtung zur Steuerung einer Wechselrichteranordnung,
- Figur 2: zeigt ein Blockschaltbild einer Parallelschalt-Baugruppe nach Figur 1, und in
- Figur 3: ist ein Impulsdiagramm dargestellt.

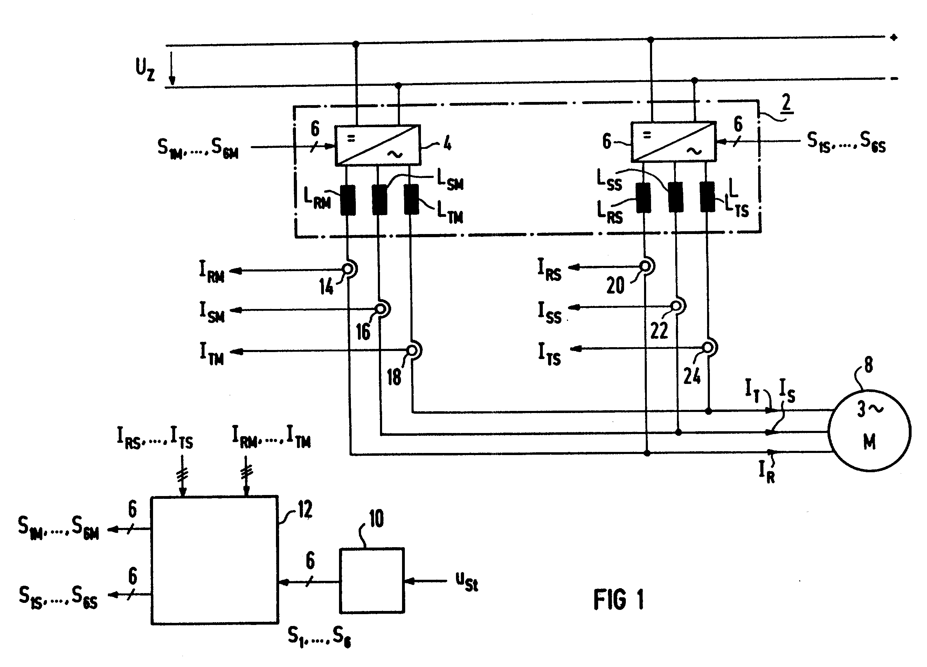

Die Figur 1 zeigt eine Wechselrichteranordnung 2, die eingangsseitig mit einer Gleichspannung U_{Z} gespeist wird. Diese Wechselrichteranordnung 2 besteht aus einer Parallelschaltung eines Master-Wechselrichters 4 und eines Slave-Wechselrichters 6. Die Ausgänge jedes Teilwechselrichters 4 und 6 sind jeweils mit einer Drosselspule L_{RM},L_{SM},L_{TM},L_{RS},L_{SS} und L_{TS} versehen. Als Drosselspule L_{RM},L_{SM},L_{TM} bzw. L_{RS},L_{SS},L_{TS} können jeweils Drehstromdrosseln verwendet werden. Außerdem können die Drosselspulen L_{RM},L_{RS} bzw. L_{SM},L_{SS} bzw. L_{TM},L_{TS} als Saugdrossel ausgebildet sein. Die Phasenleiter des Master-Wechselrichters 4 und die Phasenleiter des Slave-Wechselrichters 6 sind phasenmäßig elektrisch parallel geschaltet. An den phasenmäßig parallel geschalteten Leitern ist eine Induktionsmaschine 8 angeschlossen. Als Induktionsmaschine ist eine dreiphasige Asynchronmaschine vorgesehen, und die Teilwechselrichter 4 und 6 sind als sechspulsige Brückenschaltungen ausgeführt.

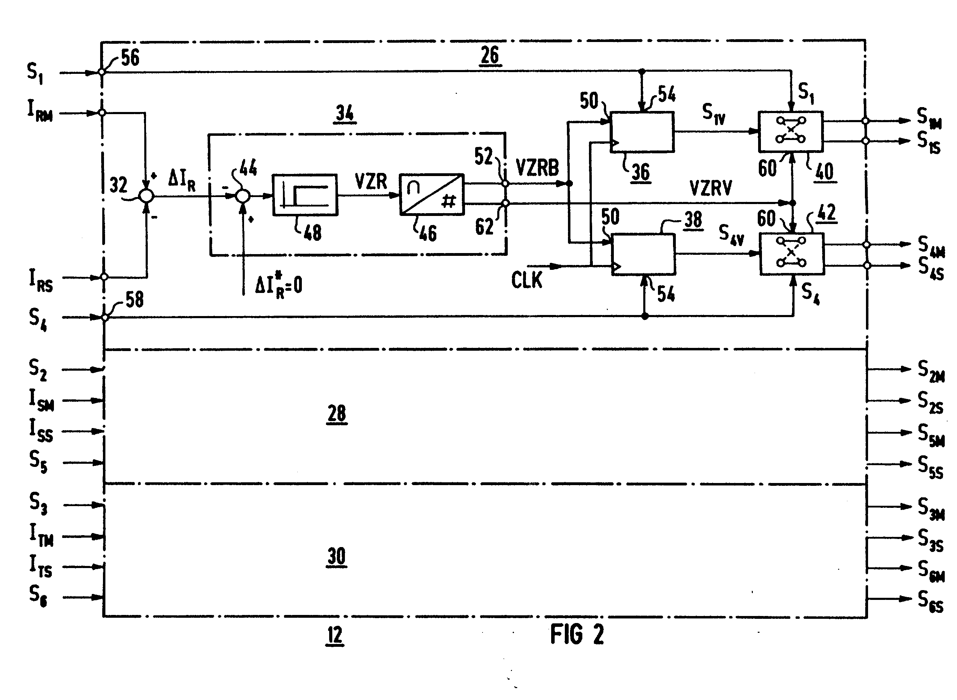

Diese Wechselrichteranordnung 2 hat einen Wechselrichtersteuersatz 10, der eingangsseitig mit einem Steuervektor u_{St} beaufschlagt wird. Dieser Steuervektor u_{St} wird in einer nicht näher dargestellten Regelungseinrichtung in Abhängigkeit von Prozeßdaten erzeugt. Der Wechselrichtersteuersatz 10 erzeugt mit bekannten Steuerverfahren sechs Steuersignale S₁,...,S₆, die mit einer nachgeschalteten Parallelschalt-Baugruppe 12 verknüpft sind. Ein Blockschaltbild der Parallelschalt-Baugruppe 12 ist in der Figur 2 näher dargestellt. An jeweils sechs Ausgängen dieser Parallelschalt-Baugruppe 12 stehen Steuersignale S_{1M},...,S_{6M} und S_{1S},...,S_{6S} an. Die Ausgänge mit den Steuersignalen S_{1M},...,S_{6M} sind mit den Steuereingängen des Master-Wechselrichters 4 und die Ausgänge mit den Steuersignalen S_{1S},...,S_{6S} sind mit den Steuereingängen des Slave-Wechselrichters 6 verbunden.

Die Parallelschalt-Baugruppe 12 ist eingangsseitig auch noch mit Stromwandlern 14,16,18,20,22 und 24 elektrisch leitend verbunden. Die Stromwandler 14,16 und 18 sind jeweils in den Phasenleitern des Master-Wechselrichters 4 angeordnet und erfassen jeweils einen Phasenstrom-Istwert I_{RM},I_{SM},I_{TM}. Die Stromwandler 22 und 24 sind jeweils in den Phasenleitern des Slave-Wechselrichters 6 angeordnet und erfassen jeweils einen Phasenstrom-Istwert I_{RS}, I_{SS}, I_{TS}.

Die Figur 2 zeigt ein Blockschaltbild der Parallelschalt-Baugruppe 12 nach Figur 1. Dieses Blockschaltbild zeigt den inneren Aufbau der Parallelschalt-Baugruppe 12. Diese Parallelschalt-Baugruppe 12 enthält bei einer dreiphasigen Wechselrichteranordnung 2 mit zwei Teilwechselrichtern 4 und 6 drei Auswerteschaltungen 26, 28 und 30. Von diesen drei identischen, den einzelnen Phasen R, S und T zugeordneten Auswerteschaltungen 26, 28 und 30 ist nur die Schaltung 26 im einzelnen dargestellt. Sie wird auch hier alleine näher erläutert:

Der Auswerteschaltung 26 wird eingangsseitig der Phasenstrom-Istwert I_{RM} des Master-Wechselrichters 4, der Phasenstrom-Istwert I_{RS} des Slave-Wechselrichters 6 und die Steuersignale S₁ und S₄ einer Phase R des Wechselrichtersteuersatzes 10 zugeführt. An den Ausgängen dieser Auswerteschaltung 26 stehen die Steuersignale S_{1M} und S_{4M} einer Phase R für den Master-Wechselrichter 4 und die Steuersignale S_{1S} und S_{4S} einer Phase R für den Slave-Wechselrichter 6 an. Aus den Phasenstrom-Istwerten I_{RM} und I_{RS} wird mittels eines Differenzbildners 32 eine Phasenstrom-Istwertdifferenz ΔI_{R} ermittelt. Diese Phasenstrom-Istwertdifferenz ΔI_{R} wird einer Einrichtung 34 zugeführt, an deren Ausgängen ein Betragssignal VZRB und ein Vorzeichensignal VZRV anstehen. Das Betragssignal VZRB wird einer ersten und einer zweiten Verschiebeeinrichtung 36 und 38 zugeführt. Ausgangsseitig ist jede Verschiebeeinrichtung 36 und 38 mit einer Umschalteinrichtung 40 und 42 verbunden. Ausgangsseitig sind diese Umschalteinrichtungen 40 und 42 mit den Ausgängen der Auswerteschaltung 26 verknüpft.

Die Einrichtung 34 zur Generierung des Betragssignals VZRB und des Vorzeichensignals VZRV weist eingangsseitig einen Vergleicher 44 und ausgangsseitig einen Analog-Digital-Wandler 46 auf. Der Ausgang des Vergleichers 44 ist über einen Regler 48 mit dem Eingang des Analog-Digital-Wandlers 46 verknüpft. Dieser Regler 48 ist im einfachsten Fall ein Proportionalregler. Am nicht-invertierenden Eingang des Vergleichers 44 steht eine Phasenstrom-Sollwertdifferenz ΔI_{R}* an, die im allgemeinen zu Null gewählt wird. Am invertierenden Eingang des Vergleichers 44 steht die ermittelte Phasenstrom-Istwertdifferenz ΔI_{R an}. Das Reglerausgangssignal VZR entspricht der zu realisierenden Verschiebung der Einschaltflanken der Steuersignale S₁ und S₄. Dieses Reglerausgangssignal VZR wird mittels des Analog-Digital-Wandlers 46 digitalisiert und in ein Betragssignal VZRB und ein Vorzeichensignal VZRV getrennt. Ebenso wäre es möglich, die AD-Wandlung vorzuverlegen und bereits den Regler 48 und/oder den Differenzbildner 44 digital auszuführen.

Als Verschiebeeinrichtung 36 und 38 ist jeweils ein Rückwärtszähler vorgesehen. Jeweils der Setzeingang 50 der Rückwärtszähler 36 und 38 ist mit dem Betragsausgang 52 der Einrichtung 34 verknüpft. Der Starteingang 54 des Rückwärtszählers 36 ist mit dem Eingang 56 der Auswerteschaltung 26 verbunden, an dem das Steuersignal S₁ des Wechselrichtersteuersatzes 10 ansteht. Der Starteingang 54 des Rückwärtszählers 38 ist mit dem Eingang 58 der Auswerteschaltung 26 verbunden, an dem das Steuersignal S₄ des Wechselrichtersteuersatzes 10 ansteht. Jedem Rückwärtszähler 36 und 38 wird ein Clock-Signal CLK zugeführt. Ausgangsseitig ist der Rückwärtszähler 36 bzw. 38 mit der Umschalteinrichtung 40 bzw. 42 verknüpft. Die Umschalteinrichtung 40 bzw. 42 ist außerdem mit dem Eingang 56 bzw. 58 der Auswerteschaltung 26 verbunden. Der Steuereingang 60 der Umschalteinrichtung 40 bzw. 42 ist mit einem Vorzeichenausgang 62 der Einrichtung 34 verbunden. In Abhängigkeit des Vorzeichensignals VZRV wird das verzögerte Steuersignal S_{1V} bzw. S_{4V} dem Master-Wechselrichter 4 bzw. dem Slave-Wechselrichter 6 zugeführt, wobei jeweils dem anderen Wechselrichter 6 bzw. 4 das Steuersignal S₁ bzw. S₄ des Wechselrichtersteuersatzes 10 zugeführt wird. Die Verschiebeeinrichtungen 36 und 38 und die Umschalteinrichtungen 40 und 42 können durch wenigstens einen programmierbaren Logikbaustein realisiert werden.

Bei einer besonders vorteilhaften Ausführungsform kann die Parallelschalt-Baugruppe 12 ein Mikrorechner sein, wobei dieser Mikrorechner die drei Auswerteschaltungen 26, 28 und 30 verwirklicht oder für jede Auswerteschaltung 26, 28 und 30 ist jeweils ein Mikrorechner vorgesehen.

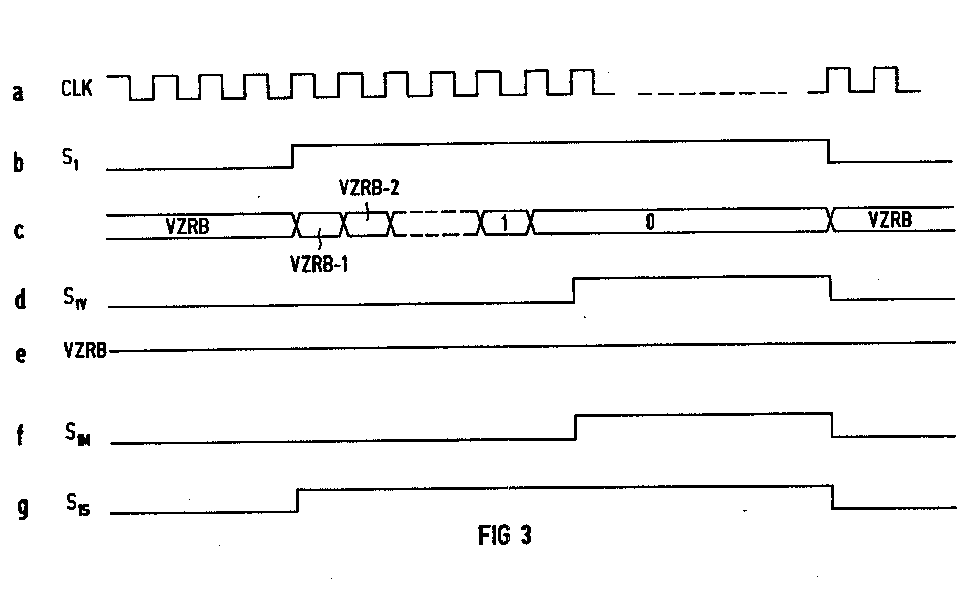

Anhand des Impulsdiagramms gemäß Figur 3 wird die Funktionsweise der Auswerteschaltung 26 näher erläutert:

Die Auswerteschaltung 26 berechnet aus den Phasenstrom-Istwerten I_{RM} und I_{RS} der Wechselrichter 4 und 6 zunächst eine Phasenstrom-Istwertdifferenz ΔI_{R}, die dem Regler 48 zugeführt wird. Das Reglerausgangssignal VZR entspricht der zu realisierenden Verschiebung des Steuersignals S₁ und S₄ der Phase R des Wechselrichtersteuersatzes 10. Dieses Reglerausgangssignal VZR wird anschließend digitalisiert und in ein Betragssignal VZRB und ein Vorzeichensignal VZRV aufgetrennt. Die beiden Rückwärtszähler 36 und 38 werden jeweils in der Ausphase des zugehörigen Stromrichterventils der Wechselrichter 4 und 6, hier gekennzeichnet durch den Low-Zustand des Steuersignals S1 (Figur 3b) bzw. S₄, auf den Wert des Betragssignals VZRB (Figur 3c) gesetzt. Sobald das Steuersignal S₁ (Figur 3b) bzw. S₄ vom Low-Zustand in den High-Zustand wechselt, beginnt der Rückwärtszähler 36 (Figur 3c) bzw. der Rückwärtszähler 38 rückwärtszuzählen. Hat der Zähler 36 bzw. 38 den Wert Null erreicht, so wechselt das verzögerte Steuersignal S_{1V} (Figur 3d) bzw. S_{4V} vom Low-Zustand in den High-Zustand. Die Ausschaltflanke des Steuersignals S₁ (Figur 3b) bzw. S₄ wird vom verzögerten Steuersignal S_{1V} (Figur 3d) bzw. S₄ᵥ unverzögert übernommen. In dem dargestellten Fall wird das verzögerte Steuersignal S_{1V} als Master-Steuersignal S_{1M} (Figur 3f) und das Steuersignal S₁ des Wechselrichtersteuersatzes 10 als Slave-Steuersignal S_{1S} (Figur 3g) ausgegeben. Diese Verteilung des verzögerten Steuersignals S_{1V} bzw. S_{4V} auf den Master-Wechselrichter 4 bzw. Slave-Wechselrichter 6 geschieht in Abhängigkeit des Vorzeichensignals VZRV.

Durch die Verschiebung nur der Einschaltflanke entweder der Steuersignale S_{1M},...,S_{6M} des Master-Wechselrichters 4 oder der Steuersignale S_{1S},...,S_{6S} des Slave-Wechselrichters 6 erreicht man, daß der Differenzstrom ΔI_{R},ΔI_{S},ΔI_{T} in beiden Richtungen beeinflußt werden kann. Somit ist es möglich, die verriegelten Steuersignale S₁,...,S₆ des Wechselrichtersteuersatzes 10 zu verwenden, ohne die Verriegelungszeit wegen der sogenannten Δ-I-Regelung verlängern zu müssen. Dieses Prinzip ist auch auf die Parallelschaltung mehrerer Wechselrichter anwendbar.

## Patentansprüche

1. Verfahren zur Steuerung einer m-pulsigen Wechselrichteranordnung (2) mit einem Wechselrichtersteuersatz (10) zur Erzeugung von m Steuersignalen (S₁,...,S₆), wobei diese Wechselrichteranordnung (2) aus einer Parallelschaltung eines Master-Wechselrichters (4) und wenigstens eines Slave-Wechselrichters (6) besteht, deren Ausgänge jeweils mit einer Drosselspule (L_{RM},L_{SM},L_{TM};L_{RS},L_{SS},L_{TS}) versehen sind und wobei die erfaßten Phasenstrom-Istwerte (I_{RM},I_{SM},I_{TM}) des Master-Wechselrichters (4) und die erfaßten Phasenstrom-Istwerte (I_{RS},I_{SS},I_{TS}) des Slave-Wechselrichters (6) zur Bestimmung von Phasenstrom-Istwertdifferenzen (ΔI_{R},ΔI_{S},ΔI_{T}) phasenmäßig voneinander subtrahiert werden, **dadurch gekennzeichnet,** daß aus diesen ermittelten Phasenstrom-Istwertdifferenzen (ΔI_{R},ΔI_{S},ΔI_{T}) jeweils korrespondierende Steuersignale (VZR,VZS,VZT) generiert werden, die jeweils nach Betrag (VZRB,VZSB,VZTB) und Vorzeichen (VZRV,VZSV,VZTV) getrennt werden, daß verzögerte Steuersignale (S_{1V},...,S_{6V}) erzeugt werden, indem die Einschaltflanken der Steuersignale (S₁,...,S₆) des Wechselrichtersteuersatzes (10) jeweils um einen ermittelten Betrag (VZRB,VZSB,VZTB) zeitlich verschoben und deren Ausschaltflanken unverzögert übernommen werden, und daß in Abhängigkeit des Vorzeichens (VZRV,VZSV,VZTV) der Master-bzw. Slave-Wechselrichter (4 bzw. 6) mit den verzögerten Steuersignalen (S_{1V},...S_{6V}) und der jeweils andere Wechselrichter (6 bzw. 4) mit den Steuersignalen (S₁, ,S₆) vom Wechselrichtersteuersatz (10) angesteuert werden.

2. Vorrichtung zur Durchführung des Verfahrens nach Anspruch 1, mit einer Wechselrichteranordnung (2), einem Wechselrichtersteuersatz (10) zur Erzeugung von m Steuersignalen (S₁,...,S₆) und einer Parallelschalt-Baugruppe (12), wobei diese Wechselrichteranordnung (2) aus einer Parallelschaltung eines Master-Wechselrichters (4) und wenigstens eines Slave-Wechselrichters (6) besteht, deren Ausgänge jeweils mit einer Drosselspule (L_{RM},L_{SM},L_{TM},L_{RS}, L_{SS},L_{TS}) und einem Stromwandler (14,...,24) versehen sind, und wobei die Parallelschalt-Baugruppe (12) pro Phase (R,S,T) einen Differenzbildner (32)aufweist, **dadurch gekennzeichnet**, daß die Parallelschalt-Baugruppe (12) für jede Phase (R,S,T) eine Auswerteschaltung (26,28,30) enthält, deren Ausgänge mit den Master- und dem Slave-Wechselrichtern (4,6) verbunden sind, daß die Auswerteschaltung (26,28,30) eingangsseitig den Differenzbildner (32) aufweist, der ausgangsseitig mit einer Einrichtung (34) verknüpft ist, deren Betragsausgang (52) jeweils mit einer ersten und einer zweiten Verschiebeeinrichtung (36,38) verbunden ist, die ausgangsseitig jeweils mit einer Umschalteinrichtung (40,42) verknüpft sind, daß ein Steuereingang (54) der ersten und zweiten Verschiebeeinrichtung (36,38) und ein weiterer Eingang der nach geschalteten Umschalteinrichtung (40,42) jeweils mit einem Eingang (56,58) der Auswerteschaltung (26,28,30) verknüpft sind, an dem ein Steuersignal (S₁,S₄; S₂,S₅; S₃,S₆) des Wechselrichtersteuersatzes (10) anstehen, und daß ein Steuereingang (60) jeder Umschalteinrichtung (40,42) mit einem Vorzeichenausgang (62) der Einrichtung (34) verknüpft sind.

3. A Vorrichtung nach Anspruch 2, **dadurch gekennzeichnet**, daß die Einrichtung (34) zur Generierung eines Betragssignals (VZRB,VZSB,VZTB) und eines Vorzeichensignals (VZRV,VZSV,VZTV) eingangsseitig einen Vergleicher (44), an dessen nicht-invertierendem Eingang eine Phasenstrom-Sollwertsdifferenz ((ΔI_{R}*,ΔI_{S}*,ΔI_{T}*) ansteht, und ausgangsseitig einen Analog-Digital-Wandler (46) aufweist, der eingangsseitig über einen Regler (48) mit dem Ausgang des Vergleichers (44) verknüpft ist.

4. Vorrichtung nach Anspruch 2, **dadurch gekennzeichnet,** daß jeweils als Verschiebeeinrichtung (36,38) ein Rückwärtszähler vorgesehen ist.

5. Vorrichtung nach Anspruch 2, **dadurch gekennzeichnet,** daß zur Ermittlung von verzögerten Steuersignalen (S_{1V},...,S_{6V}) aus den Phasenstrom-Istwerten (I_{RM},I_{RS};I_{SM},I_{SS};I_{TM},I_{TS}) und den Steuersignalen (S1,...,S6) des Wechselrichtersteuersatzes (10) ein Mikrocomputer vorgesehen ist.

6. Vorrichtung nach Anspruch 2, **dadurch gekennzeichnet**, daß als Verschiebeeinrichtung (36,38) und als Umschalteinrichtung (40,42) jeweils ein programmierbarer Logikbaustein vorgesehen ist.

7. Vorrichtung nach Anspruch 2, **dadurch gekennzeichnet**, daß als Verschiebeeinrichtung (36,38) mit nachgeschalteter Umschalteinrichtung (40,42 ) ein programmierbarer Logikbaustein vorgesehen ist.

## Claims

1. Method for the control of an m-pulse inverter arrangement (2) having an inverter trigger set (10) for producing m control signals (S₁,...,S₆), wherein this inverter arrangement (2) consists of a parallel circuit arrangement of a master inverter (4) and at least one slave inverter (6), the outputs of which are provided with a respective reactance coil (L_{RM},L_{SM},L_{TM};L_{RS},L_{SS} L_{TS}) and wherein the detected phase current actual values (I_{RM},I_{SM},I_{TM}) of the master inverter (4) and the detected phase current actual values (I_{RS},I_{SS},I_{TS}) of the slave inverter (6) are subtracted from each other in proper phase relation in order to determine phase current actual value differences (ΔI_{R},ΔI_{S},ΔI_{T}), characterised in that from these established phase current actual value differences (ΔI_{R},ΔI_{S},ΔI_{T}) there are generated respective corresponding control signals (VZR,VZS,VZT) which are broken up in each case according to amount (VZRB,VZSB,VZTB) and sign (VZRV,VZSV,VZTV), in that delayed control signals (S_{1V},...,S_{6V}) are produced by shifting, with respect to time, the turn-on edges of the control signals (S₁,...,S₆) of the inverter trigger set (10) by a respective established amount (VZRB,VZSB,VZTB) and by taking over their turn-off edges without delay, and in that as a function of the sign (VZRV,VZSV,VZTV) the master inverter or slave inverter (4 or 6) is triggered with the delayed control signals (S_{1V},...,S_{6V}) and the other respective inverter (6 or 4) is triggered with the control signals (S₁, ,S₆) from the inverter trigger set (10).

2. Apparatus for carrying out the method according to claim 1, having an inverter arrangement (2), an inverter trigger set (10) for producing m control signals (S₁,...,S₆) and a parallel-connected assembly (12), wherein this inverter arrangement (2) consists of a parallel circuit arrangement of a master inverter (4) and at least one slave inverter (6), the outputs of which are provided with a respective reactance coil (L_{RM},L_{SM},L_{TM};L_{RS},L_{SS} L_{TS}) and a respective current transformer (14,...,24), and wherein the parallel-connected assembly (12) has one subtractor (32) per phase (R,S,T), characterised in that the parallel-connected assembly (12) contains an evaluating circuit arrangement (26,28,30) for each phase (R,S,T), the outputs of which evaluating circuit arrangement are connected to the master inverter (4) and the slave inverter (6), in that on the input side the evaluating circuit arrangement (26,28,30) has the subtractor (32) which on the output side is linked to a device (34), the amount output (52) of which is connected, in each case, to a first and a second shifting device (36,38), which shifting devices on the output side are linked to a respective switch-over device (40,42), in that a control input (54) of the first and the second shifting device (36,38) and a further input of the downstream switch-over device (40,42) are linked to a respective input (56,58) of the evaluating circuit arrangement (26,28,30), to which a control signal (S₁,S₄; S₂,S₅; S₃,S₆) of the inverter trigger set (10) is applied, and in that a control input (60) of each switch-over device (40,42) is linked to a sign output (62) of the device (34).

3. Apparatus according to claim 2, characterised in that the device (34) for generating an amount signal (VZRB,VZSB,VZTB) and a sign signal (VZRV,VZSV,VZTV) has on the input side a comparator (44), to the noninverting input of which there is applied a phase current rated value difference (ΔI_{R}*,ΔI_{S}*,ΔI_{T}*), and has on the output side an analog-to-digital converter (46) which is linked on the input side by way of a controller (48) to the output of the comparator (44).

4. Apparatus according to claim 2, characterised in that a down counter is provided in each case as the shifting device (36,38).

5. Apparatus according to claim 2, characterised in that a microcomputer is provided in order to establish delayed control signals (S_{1V},...,S_{6V}) from the phase current actual values (I_{RM},I_{RS};I_{SM},I_{SS}; 1_{TM},I_{TS}) and the control signals (S₁,...,S₆) of the inverter trigger set (10).

6. Apparatus according to claim 2, characterised in that a programable logic module is provided as the shifting device (36,38) and as a switch-over device (40,42), in each case.

7. Apparatus according to claim 2, characterised in that a programmable logic module is provided as the shifting device (36,38) with a downstream switch-over device (40,42).

## Revendications

1. Procédé de commande d'un dispositif (2) d'onduleur à m impulsions, comportant un organe (10) de commande d'onduleur destiné à la production de m signaux de commande (S₁ à S₆), ce dispositif (2) d'onduleur étant constitué d'un circuit parallèle d'un moduleur maître (4) et d'au moins un onduleur esclave (6), dont les sorties sont munies chacune d'une bobine de self (L_{RM}, L_{SM}, L_{TM};L_{RS},L_{SS},L_{TS}) et les valeurs réelles de courant de phase détectées (I_{RM},I_{SM},I_{TM}) de l'onduleur maître (4) et les valeurs réelles de courant de phase détectées (I_{RS},I_{SS},I_{TS}) de l'onduleur esclave (6) étant soustraites l'une de l'autre phase à phase pour déterminer des différences de valeurs réelles de courant de phase (ΔI_{R},ΔI_{S},ΔI_{T}), caractérisé en ce que l'on génère à partir de ces différences de valeurs réelles de courants de phase déterminées (ΔIR,ΔIS,ΔIT) des signaux de commande correspondants (VZR,VZS,VZT), qui sont séparés en module (VZRB,VZSB,VZTB) et en signe (VZRV,VZSV,VZTV), on produit des signaux de commande retardés (S_{1V} à S_{6V}), par le fait que les flancs de branchement des signaux de commande (S₁ à S₆) de l'organe (10) de commande d'onduleur sont décalés dans le temps d'un module déterminé (VZRB,VZSB,VZTB) et que leurs flancs de coupure sont pris en charge sans retard, et on commande, en fonction du signe (VZRV,VZSV,VZTV), l'onduleur maître ou l'onduleur esclave (4 ou 6), par les signaux de commande retardés (S_{1V} à S_{6V}) et l'autre onduleur respectif (6 ou 4) par les signaux de commande (S₁ à S₆) de l'organe (10) de commande d'onduleur.

2. Dispositif pour la mise en oeuvre du procédé suivant la revendication 1, comportant un dispositif (2) d'onduleur, un organe (10) de commande d'onduleur pour la production de m signaux (S₁ à S₆) de commande et un module (12) de branchement en parallèle, ce dispositif (2) d'onduleur étant constitué d'un circuit parallèle d'un onduleur (4) maître et d'au moins un onduleur esclave (6), dont les sorties sont munies chacune d'une bobine de self (L_{RM},L_{SM},L_{TM},L_{RS},L_{SS},L_{TS}) et d'un convertisseur de courant (14 à 24), le module 12 de branchement en parallèle comportant un dispositif (32) de formation de différences par phase (R,S,T), caractérisé en ce que le module (12) de branchement en parallèle comprend pour chaque phase (R,S,T) un circuit (26,28,30) d'exploitation, dont les sorties sont reliées aux onduleurs (4,6) maître et esclave, le circuit (26,28,30) d'exploitation comporte en entrée le dispositif (32) de formation de différence, qui est combiné en sortie à un dispositif (34), dont la sortie (52) de module est reliée respectivement à un premier et à un second dispositif (36,38) de décalage, lesquels sont combinés en sortie respectivement à un dispositif de commutation (40,42), une entrée (54) de commande des premier et second dispositifs (36,38) de décalage et une entrée supplémentaire du dispositif (40,42) de commutation branché en aval sont combinées respectivement à une entrée (56,58) du circuit (26,28,30) d'exploitation, à laquelle est appliqué un signal de commande (S₁,S₄;S₂,S₅;S₃,S₆) de l'organe (10) de commande d'onduleur, et une entrée (60) de commande de chaque dispositif (40,42) de commutation est combinée à une sortie (62) de signe du dispositif (34).

3. Dispositif suivant la revendication 2,
caractérisé en ce que le dispositif (34) de génération d'un signal (VZRB,VZSB,VZTB) de module et d'un signal de signe (VZRV,VZSV,VZTV) comporte en entrée un comparateur (44), à l'entrée non inverseuse duquel est appliquée une différence de valeurs de consigne de courant de phases (ΔI_{R}*,ΔI_{S}*,ΔI_{T}*), et en sortie un convertisseur (46) analogique-numérique, qui est combiné en entrée par l'intermédiaire d'un régulateur (48) à la sortie du comparateur (44).

4. Dispositif suivant la revendication 2, caractérisé en ce qu'il est prévu comme dispositif (36,38) de décalage un compteur régressif.

5. Dispositif suivant la revendication 2, caractérisé en ce qu'il est prévu pour déterminer des signaux de commande retardés (S_{1V} à S_{6V}) à partir des valeurs réelles (I_{RM},I_{RS};I_{SM},I_{SS};I_{TM},I_{TS}) de courant de phase et des signaux de commande (S1 à S6) de l'organe (10) de commande d'onduleur, un microordinateur.

6. Dispositif suivant la revendication 2, caractérisé en ce qu'il est prévu comme dispositif (36,38) de décalage et comme dispositif (40,42) de commutation un module logique programmable.

7. Dispositif suivant la revendication 2, caractérisé en ce qu'il est prévu comme dispositif (36,38) de décalage en aval duquel est branché un dispositif (40,42) de commutation, un module logique programmable.
